# EUROPÄISCHE PATENTSCHRIFT

(11) **EP 0 364 841 B1**
(45) Veröffentlichungstag und Bekanntmachung des Hinweises auf die Patenterteilung: **22.12.1993**
(21) Anmeldenummer: 89118660.3
(22) Anmeldetag: 07.10.1989
(51) Int. Cl.: G01N 17/02, G01N 17/04

(54) **Korrosionsmesszelle**
Corrosion measurement cell
Cellule pour la mesure de corrosion

(30) Priorität: 11.10.1988 DE 3834628
(43) Veröffentlichungstag der Anmeldung: 25.04.1990
(73) Patentinhaber: STRABAG BAU-AG, D-50679 Köln (DE)
(72) Erfinder: Schiessl, Peter, Prof. Dr.-Ing., D-5100 Aachen (DE)
(74) Vertreter: Hennicke, Albrecht, Dipl.-Ing.

(56) Entgegenhaltungen:
- DE-A- 3 531 479
- GB-A- 2 039 049
- GB-A- 2 118 309
- GB-A- 2 157 441

## Beschreibung

Die Erfindung betrifft eine Korrosionsmeßvorrichtung zum Feststellen beginnender Korrosion und/oder zum Messen der Korrosionsintensität von in einem Betonbauteil eingebettetem Bau- bzw. Betonstahl mit mehreren, in diesem Betonbauteil im Abstand voneinander angeordneten Anoden-Elektroden aus normalem Bau- bzw. Betonstahl, die in verschieden tiefen Abständen zur Außenfläche des Betonbauteiles angeordnet sind und über ein von außen zugängliches Meßelement mit mindestens einer Kathodenelektrode aus einem edleren Material elektrisch verbunden sind, die auch mit zwischengeschaltetem Isolierstück mit einer Anoden-Elektrode zu einem Fühlelement zusammengesetzt sein kann.

Im Beton eingebettete Stahlteile, wie Profilstahlträger oder Bewehrungseinlagen aus Stahl, sind in einem ordnungsgemäß zusammengesetzten und verarbeiteten Beton unter einer ausreichend dicken Betonüberdeckung in der Regel dauerhaft vor Korrosion geschützt. Dieser Korrosionsschutz beruht nicht auf der Undurchlässigkeit des Betons, sondern auf der Alkalität des Betonporenwassers, welches üblicherweise einen pH-Wert > 12,5 aufweist. Unter diesen Bedingungen bildet sich auf der Stahloberfläche eine dünne, fest haftende Oxidschicht, welche eine Korrosion praktisch vollständig verhindert. Hierdurch wird Stahlbeton für Außenbauteile, die der Witterung ausgesetzt sind, erst verwendbar.

Unter bestimmten, ungünstigen Bedingungen kann der Korrosionsschutz der Bewehrung aber verlorengehen. Zu diesen ungünstigen Bedingungen zählen Fehler in der Bauausführung ebenso wie besonders ungünstige Umgebungsbedingungen.

Ursachen für die Korrosion können eine Karbonatisierung des Betons sein, die dann auftritt, wenn Kohlendioxid aus der Luft mit den alkalischen Bestandteilen des Zements reagiert. Als Folge einer solchen chemischen Reaktion sinkt der pH-Wert ab und der Korrosionsschutz geht verloren. Eine andere Korrosionsursache ist das Eindringen von Chloriden in den Beton, was dann geschehen kann, wenn beispielsweise auf die Betonfahrbahn einer Brücke Tausalz gestreut wird, das in gelöster Form ins Innere des Betonkörpers eindringt. Beide Prozesse beginnen an der Betonoberfläche und setzen sich ins Innere des Betons zu den dort einbetonierten Stahlteilen fort, wo sie die an diesen anhaftende Oxidschicht zum Verschwinden bringen. Es wird dann an der Stahloberfläche ein kritischer Zustand erreicht, bei dem Korrosion an den Stahlteilen einsetzt, ohne daß dies an der Betonoberfläche zunächst zu erkennen ist. Erkennbar werden Korrosionsschäden erst dann, wenn die Korrosion des Stahles schon verhältnismäßig weit fortgeschritten ist und durch den Sprengdruck der Rostprodukte die Betonüberdeckung abplatzt. In der Regel ist die Korrosion dann schon so weit fortgeschritten, daß sehr aufwendige und teure Instandsetzungsmaßnahmen erforderlich werden. In vielen Fällen ist eine Instandsetzung oft gar nicht mehr möglich, so daß das Bauwerk abgerissen und durch ein neues ersetzt werden muß.

Der Umfang von Schäden durch Korrosion der Bewehrung von Stahlbeton- und Spannbetonbauwerken ist relativ groß. Im Straßenbrückenbau kosten die jährlich erforderlichen Instandsetzungsarbeiten heute mehr als 1 % des Wiederbeschaffungswertes der Bausubstanz.

Zur zerstörungsfreien Überwachung der Korrosion von Stahlteilen im Beton ist es bekannt, im Abstand von der Betonoberfläche Meßfühler einzubetonieren, die an ein außerhalb des Betonbauteiles angeordnetes Meßelement angeschlossen werden (DE 35 31 478 A1 und DE 35 31 479 A1). Die Meßfühler bestehen aus zwei Elektroden, von denen die eine aus dem gleichen Material besteht wie die im Beton eingebetteten tragenden Stahlteile oder Bewehrungseinlagen und von denen die andere Elektrode entweder aus einem anderen, nicht korrodierenden Metall, beispielsweise Kupfer, oder auch aus Betonstahl hergestellt ist, wobei diese andere Betonstahl-Elektrode dann aber mit einer elektrisch leitenden Schutzumhüllung umgeben ist, die eine Korrosion dieser anderen Betonstahl-Elektrode verhindert. Beide Elektroden sind über ein Meßelement durch Leiter miteinander verbunden, so daß in dem Augenblick im Meßelement ein elektrischer Strom auftritt und gemessen werden kann, in dem die aktive, aus Betonstahl bestehende und ungeschützt im Beton liegende Elektrode zu korrodieren beginnt, beispielsweise wenn von der Betonoberfläche her eingedrungende Chloride ihre schützende Oxidschicht zerstört haben. Der elektrische Strom, welcher die beginnende Korrosion anzeigt, kommt dadurch zustande, daß Kupfer ein höheres Potential in der Spannungsreihe aufweist als normaler Betonstahl. Dies führt dann dazu, daß in einer Elektrolytlösung das Kupfer kathodisch wirkt und der unedlere Betonstahl zur Anode wird. Auch bei einer äußeren elektrischen Verbindung zwischen einer korrodierenden Baustahl-Anode und einer nicht korrodierenden Baustahl-Kathode tritt die Eisenauflösung nur an der Anode auf, während an der Kathode lediglich die Hydroxylionenbildung abläuft. Der Korrosionsprozeß läuft ab, wenn die beiden Elektroden einerseits elektrisch leitend über eine elektrisch leitende Verbindung und andererseits elektrolytisch über ein Elektrolyt verbunden sind. Der Korrosionsprozeß hat zur Folge, daß Elektronen von der Anode zur Kathode fließen, d.h. es fließt während des Korrosionsprozesses ein elektrischer Strom, der auch einer Messung zugänglich ist.

Mit den bekannten Meßfühlern is es nur möglich, einen einzigen Horizont im Betonbauteil zu erfassen, in welchem die korrodierende Elektrode des Meßfühlers liegt. Das Auftreten eines elektrischen Stromes im Meßelement kann deshalb nur darüber Auskunft geben, ob im Horizont der korrosiven Elektrode des Meßfühlers Korrosionsgefahr besteht. Wie schnell eine Karbonatisierung des Betons fortschreitet und wann eine Korrosionsgefahr für die im Bauwerk eingebetteten, tragenden Stahlteile eintritt, kann mit den bekannten Meßfühlern jedoch nicht festgestellt werden. Diese bilden außerdem selbst eine Gefahr für das Bauwerk, da sie den Beton zerstören können, sobald sie wie die Stahlteile zu rosten beginnen, die sie überwachen sollen.

Es ist ferner eine Korrosionsmeßvorrichtung der eingangs näher erläuterten Art bekannt (GB-A 2039049) bei der in verschiedenen Abständen von der Außenfläche eines Betonbauteiles mehrere Anoden-Elektroden aus normalem Bau- bzw. Betonstahl eingebaut sind, welche mit Isoliermaterial in Hülsen aus edlerem Material eingebettet sind, welche die Kathoden-Elektroden bilden. Diese Kathoden-Hülsen sind alle auf einer gemeinsamen Grundplatte befestigt, die aus dem gleichen Material besteht wie die Hülsen und die ebenso wie die Anoden-Elektroden durch einen isolierten Leiter an eine Meßvorrichtung angeschlossen ist.

Diese bekannte Korrosionsmeßvorrichtung ist sehr unhandlich und muß schon vor dem Einbringen des Betons in der Schalung an den zu überwachenden Bewehrungselementen montiert werden. Hierbei ist es schwierig, die gewünschten Abstände der Anoden-Elektroden von der Betonoberfläche genau einzuhalten.

Außerdem kann es leicht geschehen, daß die Kathodenhülsen oder die frei im Beton verlegten isolierten Leiter beim Einbringen des Frischbetons in die Schalung beschädigt werden. Ferner kann sich die ganze Korrosionsmeßvorrichtung im Inneren des Betons verschieben, was nicht ohne weiteres bemerkt werden kann. Da ferner nur ein Meßelement vorhanden ist, an das alle Anoden-Elektroden angeschlossen sind,spricht dieses Meßelement immer an, wenn eines der in verschiedenem Abstand von der Betonoberfläche angeordneten Elektrodenpaare einen Korrosionsstrom erzeugt. Hierbei kann jedoch nicht ohne weiteres festgestellt werden, welches der Elektrodenpaare den Strom erzeugt hat und wie weit eine Verminderung der Alkalität des Betons durch Karbonatisierung oder Chloridisierung fortgeschritten ist.

Aufgabe der Erfindung ist es, eine Korrosionsmeßvorrichtung der eingangs näher erläuterten Art so auszubilden, daß diese an beliebigen Stellen der verschiedensten Betonbauteile vor oder nach dem Einbringen des Frischbetons in jeder gewünschten Lage leicht so eingebaut werden kann, daß die einzelnen Anoden-Elektroden oder Elektrodenpaare einen genau bestimmten Tiefenabstand zur Betonoberfläche haben.

Diese Aufgabe wird mit der Erfindung dadurch gelöst, daß alle Elektroden oder aus diesen zusammengesetzte Fühlelemente an ihren Enden mit langgestreckten Holmen aus den elektrischen Strom nichtleitendem Material zu einem einzigen Fühlorgan verbunden sind und das an den Holmen die zur Betonoberfläche führenden elektrischen Leiter angeordnet sind.

Ein solches, wie eine Sprossenleiter ausgebildetes Fühlorgan kann als Ganzes vor dem Einbringen des Frischbetons in der Schalung befestigt oder auch nach dem Einbringen des Frischbetons von oben her in diesen so eingedrückt werden, daß die einzelnen Elektroden-Sprossen den gewünschten Abstand von der Betonoberfläche haben. Hierbei ist eine Beschädigung des Fühlorganes nicht zu befürchten.

Soweit im folgenden von einem "edleren Material" die Rede ist, wird hierunter jedes zur Herstellung einer Elektrode geeignete Material verstanden, das in der Spannungsreihe ein höheres Potential aufweist als normaler Betonstahl oder Baustahl. Ein solches edleres Material ist beispielsweise Silber, Kupfer oder Edelstahl. Die aus solchen edleren Materialien hergestellten Elektroden sollen im folgenden immer als "Kathoden-Elektroden" bezeichnet werden, ohne Rücksicht darauf, ob sie nun aus Edelstahl, Kuper, Silber oder einem anderen Material hergestellt sind, das gegenüber normalen korrodierenden Baustählen oder Bewehrungsstählen ein höheres Potential aufweist. Stähle aller Art, wie Profilstähle, Bewehrungsstähle oder Spannstähle, die zusammen mit Beton zu Stahlbeton, Spannbeton oder Verbundbaukörpern verarbeitet und mindestens teilweise im Beton eingebettet werden, werden im folgenden generell als "Baustähle" bezeichnet; die aus einem solchen Stahl hergestellten Elektroden werden "Anoden-Elektroden" genannt.

Korrosionsmeßvorrichtungen, die nach der Erfindung mit mehreren, in verschiedenem Abstand zur Außenfläche des Betonbauteiles angeordneten Anoden-Elektroden und mehreren, diesen zugeordneten Meßelementen versehen sind, gestatten es, den zeitlichen Ablauf der von der Betonoberfläche eines Bauwerkes nach innen fortschreitenden Karbonatisierung oder Chloridisierung des Betons zu verfolgen und rechtzeitig Schutzmaßnahmen einzuleiten, wenn sich die Korrosionsgefahr den im Beton eingebetteten tragenden Stahlteilen nähert. Die Überwachung des zeitlichen Alaufes einer möglichen Schädigung ist deshalb besonders wichtig, weil die Karbonatisierungsprozesse nicht kontinuierlich ablaufen und sehr stark von Umwelteinflüssen abhängen. Beispielsweise ist es durchaus möglich, daß eine zunächst eingetretene Karbonatisierung oder Chloridisierung von selbst zum Stillstand kommt, später aber wieder in Gang gesetzt wird und fortschreitet. Es ist auch wichtig zu erkennen, ob eingeleitete Sanierungsmaßnahmen wirksam geworden sind, d.h. ob eine den Zutritt von Feuchtigkeit hemmende Ab - dichtung der Betonaußenfläche den Stillstand einer im Gang befindlichen Chloridisierung zur Folge gehabt hat.

Die an den Elektroden angeschlossenen, elektrischen Leitungsdrähte, die zur Betonoberfläche führen, können dann an den Holmen des Bauelementes befestigt werden, welches die Gestalt einer Sprossenleiter hat, deren Sprossen von der Kathoden-Elektrode und den Anoden-Elektroden bzw. von den aus den gegeneinander isolierten Anoden-Kathodenpaaren bestehen und deren Holme von rechteckigen oder profilierten Stäben aus Isoliermaterial gebildet werden. Diese Bauelemente sind gegenüber der Betonoberfläche schwach geneigt im Beton derart eingebaut, daß die Elektroden in ihrer Längsrichtung etwa parallel zur Betonoberfläche verlaufen, aber von dieser unterschiedlich tiefe Anstände haben. Die einzelnen Elektroden bzw. Elektrodenpaare befinden sich dann in einem unterschiedlich tiefen Abstand von der Oberfläche, der durch die Neigung des Bauelementes gegenüber der Betonoberfläche nach Belieben gewählt werden kann. Außerdem hat ein solches Bauelement in Form einer Sprossenleiter den Vorteil, daß die in verschiedenen Höhen angeordneten Elektroden bzw. Elektrodenpaare voneinander unabhängig und unbeeinflußt sind. Beim Einbringen des Frischbetons in die Schalung des mit der Korrosionsmeßzelle zu überwachenden Bauwerkes kann der Beton zwischen den Elektroden bzw. Elektrodenpaaren des in der Schalung in Stellung gebrachten Bauelementes hindurchfließen, so daß das Einbringen des Frischbetons nicht behindert wird. Ferner ist nicht zu befürchten, daß sich an den Grenzflächen zwischen Bauelement und Beton Pfade ausbilden, auf denen Chloride besonders leicht ins Innere des Betonbaukörpers vordringen können.-

Um die an die Elektroden angeschlossenen elektrischen Leitungen zu schützen, kann jeder Holm mindestens einen in Längsrichtung des Holmes verlaufenden Hohlraum aufweisen, in dem die elektrischen Leiter angebracht sind.

Besonders zweckmäßig ist es, wenn jede Anoden-Elektrode in einer anderen Tiefe zur Außenfläche des Betonbauteiles angeordnet und mit einem eigenen Meßelement versehen ist. Diese Ausbildung hat den Vorteil, daß die fortschreitende Karbonatisierung oder Chlodisierung des Betons automatisch jeweils von demjenigen Meßelement angezeigt wird, dessen zugeordnete Anoden-Elektrode in den gefährdeten Horizont gerät.

Beim Einbau von Korrosionsmeßzellen in Betonbauwerke besteht das Problem, daß nach dem Anspringen einer jeden einzelnen Meßzelle, d.h. nach dem Einsetzen der Korrision und des hiermit verbundenen Korrisionsstromes die Anoden-Elektroden korrodieren. Diese Korrosion kann insbesondere bei den in der Nähe der Betonoberfläche angeordneten Anoden-Elektroden durch die Sprengwirkung des sich bildenden Rostes zu Rissen im Beton und zum Abplatzen von Betonteilen an der Betonoberfläche führen. Die jeweilige Einzelmeßzelle wird hierdurch unbrauchbar. Außerdem wird der Beton des Bauwerkes geschädigt. Durch Ausschalten des jeweiligen Fühlelementes, d.h. durch Trennen der elektrischen Verbindung zwischen Anode und Kathode, kann die Korrosion der Anoden-Elektrode auch nicht verhindert werden, da der Betonstahl der Anoden-Elektrode nachh dem Anspringen des Einzelementes in einer Betonumgebung liegt, die keinen Korrosionsschutz mehr bietet. Ferner wird durch die zunehmende Korrosion an der Anoden-Elektrode das Meßergebnis der Einzelmeßzelle negativ beeinflußt.

Um diese Schwierigkeiten zu überwinden, ist es zweckmäßig, mindestens derjenigen Anoden-Elektrode, die einer Betonoberfläche am nächsten liegt, eine Polarisationseinrichtung zuzuordnen, auf welche der bei Korrosion der Anoden-Elektrode entstehende Korrosionsstrom umschaltbar ist und welche die Anoden-Elektrode so polarisiert, daß der Korrosionsstrom und damit die Korrosion der Anoden-Elektrode zum Stillstand kommt.

Die Polarisation der Anoden-Elektrode erfolgt zweckmäßigerweise durch Fremdstromeinspeisung nach dem Prinzip des kathodischen Korrosionsschutzes. Durch eine externe Stromquelle (Batterie oder Galvanostat) wird dabei ein elektrischer Strom von der Kathoden-Elektrode zur Anoden-Elektrode erzeugt. Dadurch wird die Anoden-Elektrode vor weiterer Korrosion geschützt, während die Kathoden-Elektrode als edles Metall nach wie vor nicht korrodiert.

Eine solche Ausgestaltung hat den Vorteil, daß die jeweilige Einzelmeßzelle "stillgelegt" werden kann, wenn die Korrosion begonnen hat und eine fortlaufende Messung des Korrosionsstromes nicht erforderlich ist. Obgleich der Betonstahl der Anoden-Elektrode nun in korrosiver Umgebung liegt, ist es nun durch die Fremdstromeinspeisung möglich, die weitere Korrosion der aus Betonstahl oder Baustahl bestehenden Anoden-Elektrode zu verhindern und hierdurch Schädigungen des Betons zu vermeiden, die durch eine Korrosion dieser Anoden-Elektrode auftreten könnten.

Besonders zweckmäßig ist es, wenn die Polarisationseinrichtung der jeweiligen Meßzelle parallelgeschaltet ist und der Korrosionsstrom durch einen Wechselschalter wahlweise auf die Meßzelle und die Polarisationseinrichtung schaltbar ist. Es ist dann möglich, zu beliebigen Zeiten das Meßelement der jeweiligen Anodenelektrode bzw. des jeweiligen Fühlelementes wieder einzuschalten und den dann auftretenden Korrosionsstrom festzustellen, der ein Maß für die Korrosionsintensität zum jeweiligen Zeitpunkt ist und Rückschlüsse auf die Korrosionsgefährdung zuläßt. Durch das Stillegen der in korrosive Umgebung geratenen Fühlelemente wird außerdem vermieden, daß die Einzelelemente infolge Korrosion nur ein ungenaues Meßergebnis liefern. Außerdem erzeugen die einzelnen Fühlelemente keine Korrosionsprodukte, die zu Rissen im Beton führen können. Die Korrosionsmeßzelle und ihre Einzelelemente bleiben hierdurch über beliebig lange Zeiträume nutzbar.

Zum Stillegen der einzelnen Fühlelemente können beispielsweise galvanostatische Polarisationsschaltungen bekannter Art eingesetzt werden. Besonders zweckmäßig ist es jedoch, wenn die Polarisationseinrichtung einen Potentiostaten aufweist, der die Anoden-Elektrode aus Betonstahl so polarisiert, daß der Korrosionsstrom zum Stillstand kommt.

Bei einer anderen Ausführungsform der Erfindung können nicht nur die Anoden-Elektroden, sondern auch die Kathoden-Elektroden aus dem gleichen Material bestehen wie die im Betonbauteil eingebetteten Bau- bzw. Betonstahlteile. Hierbei wird dann die Kathoden-Elektrode in einer größeren Tiefe zur Außenfläche des Betonbauteiles angeordnet als die Anoden-Elektroden. Als Kathoden-Elektrode kann dann ein im Beton des Bauelementes eingebettetes Baustahlteil oder ein Betonstahl-Bewehrungselement herangezogen werden.

Weitere Merkmale und Vorteile der Erfindung ergeben sich aus der nachfolgenden Beschreibung und den Zeichnungen, in denen mehrere Ausführungsformen der Erfindung an Beispielen näher erläutert sind. Es zeigt:
- Fig. 1: eine einzelne Meßzelle für eine erfindungsgemäße Korrosionsmeßzelle in einer schematischen Darstellung,
- Fig. 2: eine erste Ausführungsform der Erfindung in einer schematischen Schnittdarstellung,
- Fig. 3: eine zweite Ausführungsform der Erfindung in einer schematischen Schnittdarstellung,
- Fig. 4: zu einem einzigen Bauelement zusammengefaßte Elektrodenpaare für eine dritte Ausführungsform der erfindungsgemäßen Korrosionsmeßzelle in einer Draufsicht,
- Fig. 5: die in einem Betonbauteil eingebaute Korrosionsmeßzelle nach Fig. 4 in einer seitlichen Ansicht,
- Fig. 6: eine abgewandelte Ausführungsform eines aus mehreren Elektrodenpaaren zusammengesetzten Bauelementes für eine Korrosionsmeßzelle nach der Erfindung in einer Draufsicht,
- Fig. 7: den Gegenstand der Fig. 6 in einer Stirnansicht,
- Fig. 8: eine Korrosionsmeßzelle nach der Erfindung mit einem in Fig. 5 oder 6 dargestellten Bauelement und Polarisationsschaltungen für die einzelnen Elektrodenpaare, von denen in Fig. 8 jedoch nur eine Schaltung dargestellt ist,
- Fig. 9: eine Korrosionsmeßzelle nach der Erfindung in schematischer Darstellung, bei der sowohl die Anoden-Elektrode als auch die Kathoden-Elektrode aus gewöhnlichem Baustahl bestehen,
- Fig. 10: eine nach dem Prinzip von Fig. 9 in ein Stahlbetonbauteil eingebaute Korrosionsmeßzelle nach der Erfindung in einer schematischen Schnittdarstellung.

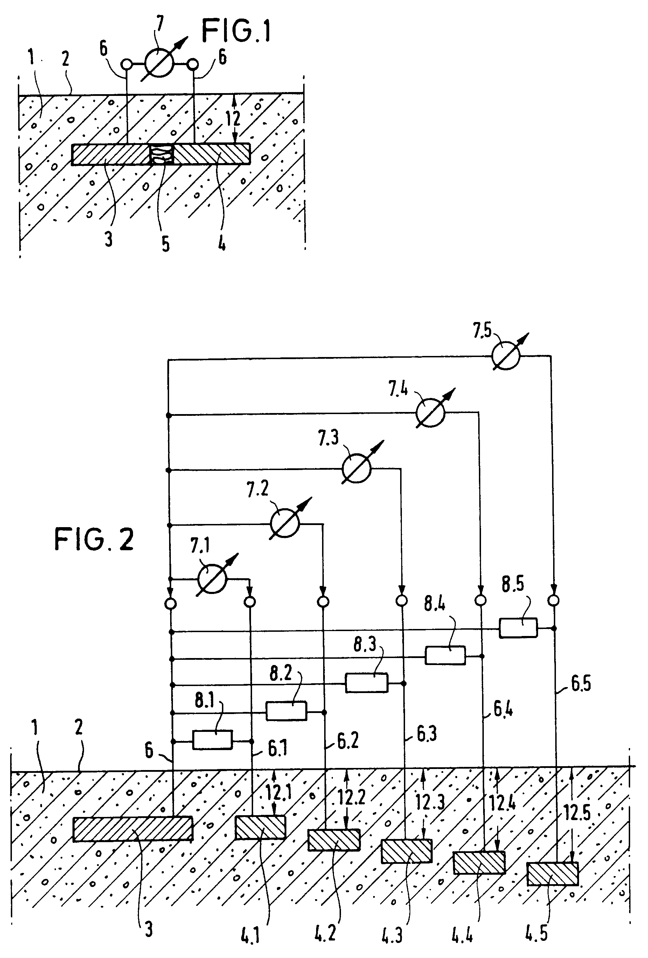

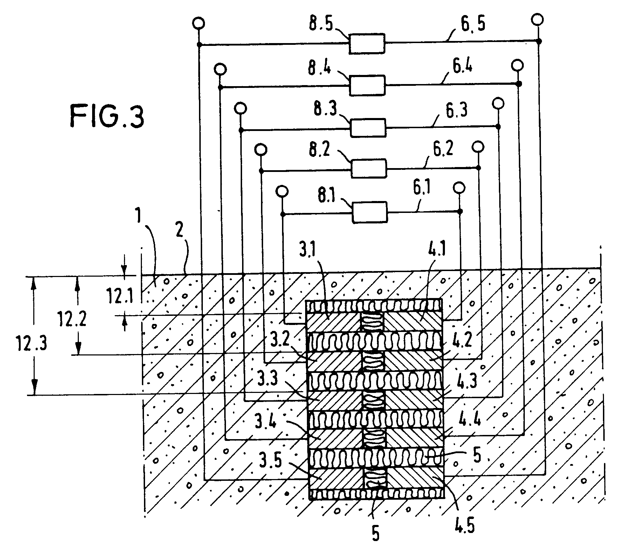

Das Prinzip der erfindungsgemäßen Korrosionsmeßzelle wird zunächst anhand einer einzelnen Meßzelle der bei der Ausführungsform nach Fig. 3 verwendeten Art in Fig. 1 naher erläutert:
In einem zu überwachenden Betonbauteil 1 ist eine Kathoden-Elektrode 3 aus Edelstahl und eine Anoden-Elektrode aus normalem Betonstahl in seitlichem Abstand voneinander und im Abstand 12 von der Betonoberfläche oder -außenfläche 2 des Betonbauteiles 1 einbetoniert. Im dargestellten Fall sind die beiden Elektroden durch ein Isolierstück 5 aus elektrisch isolierendem Material voneinander getrennt, aber durch dieses mechanisch fest verbunden, indem sie an diesem Isolierstück 5 angeklebt sind, so daß sie zusammen mit diesem ein einstückiges Fühlelement bilden. Das Isolierstück 5 legt hierbei einen vorgegebenen Abstand zwischen der Anoden-Elektrode 4 und der Kathoden-Elektrode 3 fest.

An jede der beiden Elektroden 3 und 4 ist ein elektrischer Leiter 6 angeschlossen, die beide elektrisch isoliert durch den Beton nach außen geführt sind und durch welche die Elektroden 3 und 4 außerhalb der Betonaußenfläche 2 miteinander verbunden sind. In diese elektrische Verbindung ist eine Meßvorrichtung 7 eingeschaltet, die einen Stromfluß zwischen den beiden Elektroden 3 und 4 erfassen kann.

Die Formgebung der Elektroden ist beliebig, die Größe ihrer Berührungsflächen mit dem Beton bestimmt jedoch die Größe der für die Korrosionsintensität charakteristischen Stromstärke. Die aus Anode und Kathode bestehende Einzelmeßzelle ist mit der normalen Bewehrung des Betonbauteiles oder mit in diesem Betonbauteil eingebetteten Stahlbauteilen elektrisch nicht verbunden.

Solange die von den Elektroden 3 und 4 gebildete Einzelmeßzelle in einem Betonbereich liegt, in dem die Alkalität des Betons der Bewehrung einen Korrosionsschutz bietet, sind sowohl die Kathoden-Elektrode 3 als auch die Anoden-Elektrode 4 von einer Oxidschicht überzogen und hierdurch vor Korrosion geschützt. In diesem Falle fließt im Stromkreis kein Strom und es wird auch in der Meßvorrichtung 7 kein Strom gemessen. Dies bedeutet, daß in der Tiefe oder in dem Horizont, in dem sich das Fühlelement befindet, keine Korrosionsgefahr für die dort angeordnete Bewehrung besteht.

Wird nun der Beton von außen her karbonatisiert oder dringen in Wasser gelöste Chloride von der Betonaußenfläche 2 ins Innere des Betonbauteiles 1 ein, wird die Oxidschicht zerstört, welche die Anoden-Elektrode 4 aus Betonstahl überzieht, sobald die Karbonatisierung des Betons oder der Chloridgehalt an dieser Stelle einen kritischen Grenzwert übersteigt. Der Korrosionsschutz der Anoden-Elektrode geht hierdurch verloren. Die Kathoden-Elektrode 3 aus Edelstahl jedoch unterliegt ihrer chemischen Zusammensetzung wegen der Korrosion nicht.

Wenn die nun ungeschützte, beispielsweise der Chlorideinwirkung ausgesetzte Anoden-Elektrode zu korrodieren beginnt, bildet sie zusammen mit der Kathoden-Elektrode 3 aus Edelstahl ein galvanisches Element, das elektrolytisch über den Beton und elektrisch durch die elektrischen Leiter 6 außerhalb des Betons über das Meßgerät 7 verbunden ist. Der durch die Korrosion verursachte elektrische Strom kann in dem Meßgerät 7 gemessen werden. Er ist ein Maß dafür, wann in dem Abstand 12 von der Betonaußenfläche 2 Korrosionsgefahr für die dort befindliche Bewehrung oder andere Stahlteile besteht.

Der Absolutwert des Stromes gibt unter Berücksichtigung der Größe der Berührungsflächen der Elektroden mit dem Beton darüber hinaus Auskunft über die zu erwartenden Korrosionsraten bzw. Korrosionsgeschwindigkeiten, die von vielen Einflußgrößen abhängen und ohne eine solche Messung kaum abzuschätzen sind. Mit der erfindungsgemäßen Meßmethode können deshalb quantitative Auskünfte über die zu erwartenden Korrosionsraten an der Bewehrung erhalten werden.

Eine erfindungsgemäße Ausgestaltung einer Korrosionsmeßzelle nach der Erfindung ist in Fig. 2 dargestellt.

Wie aus der Zeichnung hervorgeht, sind in einem Betonbauteil 1 im Abstand 12.1 von der Betonaußenfläche 2 eine Kathoden-Elektrode 3 und eine Anoden-Elektrode 4.1 angeordnet. Die Kathoden-Elektrode 3 besteht beim dargestellten Ausführungsbeispiel aus Edelstahl, kann aber auch as Kupfer oder einem anderen Metall bestehen, das edler ist als Baustahl. Die Anoden-Elektrode 4.1 besteht aus dem gleichen Material wie die im Betonbauteil eingebettete Bewehrung, nämlich aus Baustahl. Sie ist in seitlichem Abstand von der Kathoden-Elektrode 3 angeordnet und ebenso wie diese an einen elektrischen Leitungsdraht 6 angeschlossen, der gegen den Beton elektrisch isoliert nach außen geführt ist. Die von den Elektroden 3 und 4.1 kommenden Leitungsdrähte 6 und 6.1 sind, wie weiter oben in Fig. 1 näher erläutert, über ein Meßinstrument 7.1 miteinander verbunden. Außerdem ist in den Stromkreis ein niederohmiger Widerstand 8.1 mit etwa 10 Ω eingebaut, so daß der Stromfluß jederzeit durch Abgreifen des Spannungsabfalles mit dem Meßgerät 7.1 ermittelt werden kann, ohne daß in den Stromkreis eingegriffen werden muß und ohne daß an dieser Stelle ein Spannungsmeßgerät bereitgehalten werden muß. Die Messung des Stromes bzw. das Anzeigen von Korrosion kann durch geeignete elektrische Schaltungen in beliebiger Weise erfolgen.

Außer der ersten Anoden-Elektrode 4.1 sind weitere Anoden-Elektroden 4.2, 4.3, 4.4, 4.5 in seitlichem Abstand von. einander und in unterschiedlicher Tiefe, d.h. in immer größer werdenden Abständen 12.2, 12.3, 12.4 und 12.5 von der Betonaußenfläche 2 angeordnet. Ebenso wie die erste Anoden-Elektrode 4.1 sind auch die weiteren Anoden-Elektroden 4.2, 4.3, 4.4, 4.5 an elektrische Leiter 6.2, 6.3, 6.4 und 6.5 angeschlossen, die elektrisch isoliert durch den Beton nach außen geführt und jeweils durch eigene Meßinstrumente 7.2, 7.3 usw. mit dem elektrischen Leiter 6 verbunden sind, der an die Kathoden-Elektrode 3 angeschlossen ist. In jeden der einzelnen Stromkreise sind auch, wie weiter oben beschrieben, niederohmige Widerstände 8.2, 8.3, 8.4 und 8.5 eingeschaltet.

Man erkennt, daß beim fortschreitenden Eindringen der Karbonatisierung oder von wässrigen Chloridlösungen von der Betonaußenfläche 2 ins Innere des Betonbauteiles 1 eine Anoden-Elektrode nach der anderen von der Karbonatisierung bzw. den Chloriden erreicht wird, die in entsprechendem zeitlichen Abstand nacheinander zu korrodieren beginnen und einen Strom erzeugen, der an dem jeweils zugeordneten Meßgerät 7.1 bis 7.5 festgestellt und der Größe nach gemessen werden kann. Hierdurch ist es möglich, den zeitlichen Verlauf des Eindringens von Stoffen zu erfassen, welche die Bewehrung zu schädigen in der Lage sind, und es ist möglich, zur rechten Zeit Vorkehrungen zu treffen, um der Zerstörung rechtzeitig Einhalt zu gebieten.

Eine weitere Ausführungsform der Erfindung ist in Fig. 3 gezeigt. Bei dieser Ausführungsform sind die Anoden-Elektroden aus Betonstahl 4.1 bis 4.5 mit den Kathoden-Elektroden 3.1 bis 3.5 durch zwischengeschaltete Isolierstücke 5 mechanisch zu einstückigen Fühlelementen verbunden. Diese Fühlelemente sind durch geeignete Isolierschichten 5′ elektrisch gegeneinander isoliert und zu einem plattenförmigen Zellelement zusammengefaßt, das als Ganzes im Betonbauteil einbetoniert werden kann. Hierbei sind die Elektrodenpaare der einzelnen Fühlelemente über voneinander getrennte Stromkreise 6.1 bis 6.5 über hier nicht näher dargestellte Meßinstrumente 7.1 bis 7.5 miteinander verbunden, wobei auch hier niederohmige Widerstände 8 vorgesehen sind.

In gleicher Weise wie bei dem zuvor beschriebenen Ausführungsbeispiel können die durch Korrosion verursachten Korrosionsströme, die in den verschiedenen Tiefen 12.1 bis 12.5 auftreten, in denen sich die Fühlelemente befinden, von den jeweiligen Meßinstrumenten erfaßt werden, wobei jeweils die Zeit festgestellt werden kann, zu welcher die Korrosion in der entsprechenden Tiefe beginnt und wobei auch die Stärke der jeweiligen Korrosionsströme ermittelt werden kann, die in den einzelnen Schichten auftritt, denen die jeweiligen Fühlelemente zugeordnet sind.

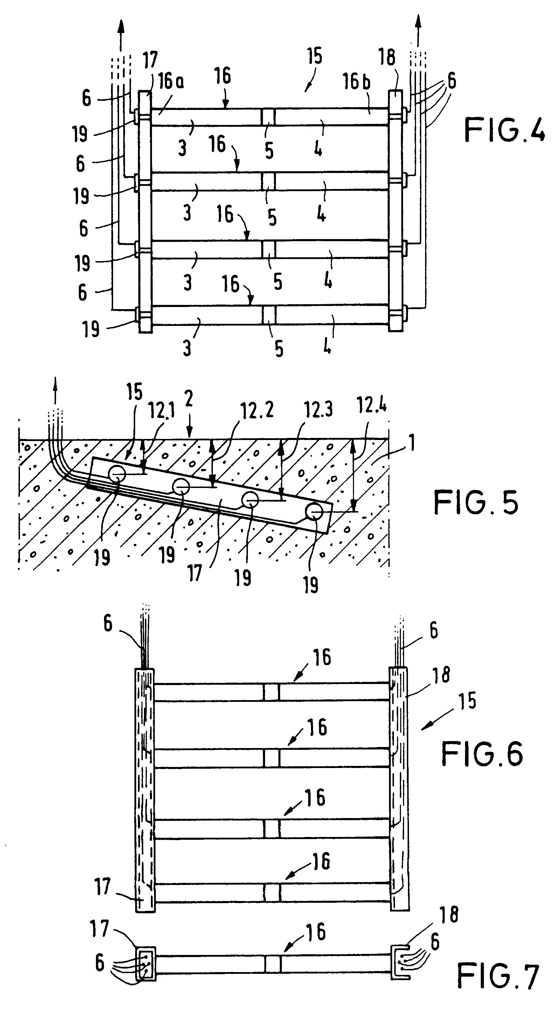

Bei dem in den Fig. 4 bis 8 dargestellten Ausführungsbeispiel der Erfindung besteht das Fühlorgan 15 aus vier Fühlelementen 16 der in Fig. 1 näher erläuterten Art, d.h. jedes Fühlelement ist aus einer Kathoden-Elektrode 3 aus Edelstahl und einer Anoden-Elektrode 4 aus Betonstahl zusammengesetzt, die durch ein Isolierstück 5 aus elektrisch nicht-leitendem Material miteinander verbunden und elektrisch gegeneinander isoliert sind. Die einzelnen Fühlelemente sind parallel und in gegenseitigem Abstand voneinander mit ihren beiden äußeren Enden 16a und 16b an seitlichen Holmen 17 und 18 befestigt, die aus einem elektrisch nicht-leitenden Isoliermaterial, beispielsweise aus einem geeigneten Kunststoff, bestehen und bei dem in Fig. 4 dargestellten Ausführungsbeispiel einen rechteckigen Querschnitt haben. An jede der Elektroden 3 und 4 ist je ein elektrischer Leitungsdraht 6 angeschlossen, der mit dem Befestigungsmittel, beispielsweise einer Niete oder Schraube 19, elektrisch leitend angeschlossen sein kann, welche die jeweilige Elektrode 3 bzw. 4 mechanisch fest mit dem zugeordneten Holm 17 bzw. 18 verbindet. Die elektrischen Leitungen 6 eines jeden Elektrodenpaares oder Fühlelementes 16 sind bis zur Betonaußenseite 2 des Betonkörpers 1 geführt und ebenso, wie in Fig. 2 gezeigt, mit je einem Meßgerät 7 verbunden, wobei in den jeweiligen Stromkreis auch ein Meßwiderstand 8 eingeschaltet sein kann. Diese Meßgeräte und Meßwiderstände sind in den Fig. 4 bis 7 jedoch nicht dargestellt.

Wie aus Fig. 5 hervorgeht, ist das Fühlorgan 15, bei dem fünf Fühlelemente 16 mit den seitlichen Holmen 17 und 18 zu einem einzigen Bauelement fest miteinander verbunden sind, in dem Betonbauteil 1 gegenüber der Betonoberfläche 2 schwach geneigt derart einbetoniert, daß die Elektroden etwa parallel zur Betonoberfläche 2 verlaufen und von dieser unterschiedliche Abstände 12.1, 12.2, 12.3 und 12.4 haben. Hierbei ist die Anordnung so getroffen, daß die Fühlelemente untereinander den gleichen Abstand haben, wie ihn das oberste Fühlelement von der Betonaußenfläche 2 hat.

Das in den Fig. 6 und 7 dargestellte Fühlorgan entspricht im wesentlichen dem Fühlorgan nach den Fig. 4 und 5. Der Unterschied besteht nur darin, daß jeder Holm 17 bzw. 18 mindestens einen in Längsrichtung des Holmes verlaufenden Hohlraum 20 aufweist, in dem die an die Elektroden 3 und 4 der Fühlelemente 16 angeschlossenen Leiter 6 untergebracht sind. Die Holme können ein Hohlprofil, beispielsweise ein Kastenprofil, haben, wie es auf der linken Seite der Fig. 6 und 7 dargestellt ist; sie können aber auch als U-Profil ausgebildet sein, wie dies auf der rechten Seite der Fig. 6 und 7 angedeutet ist.

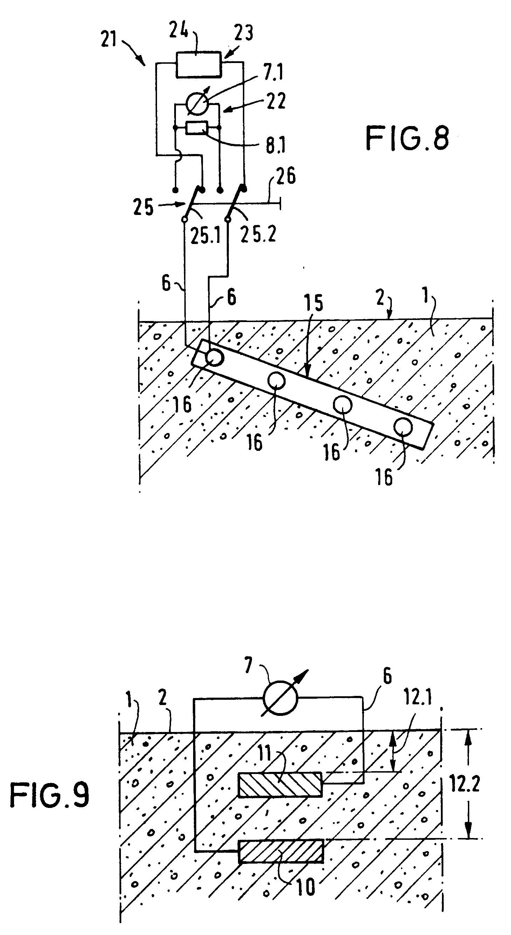

Bei der Ausführungsform nach Fig. 8 ist das Fühlorgan 15 ebenso wie bei den zuvor beschriebenen Ausführungsformen nach Art einer Sprossenleiter ausgebildet und ebenso flach geneigt gegen die Betonaußenfläche 2 im Betonbauteil 1 eingebettet. Von den nach außen geführten, an die einzelnen Fühlelemente angeschlossenen elektrischen Leitern sind nur die elektrischen Leitungsdrähte 6 dargestellt, die dem obersten Fühlelement zugeordnet sind. Die übrigen Fühlelemente, die tiefer im Beton angeordnet sind, haben einfache Meßelemente, wie sie in den Fig. 1 und 2 dargestellt sind; sie können aber auch die gleiche Meßschaltung 21 aufweisen wie das oberste Fühlelement 16.

Die dem obersten Fühlelement 16 zugeordnete Meßschaltung 21 hat eine Meßvorrichtung 22, die wie bei dem in Fig. 2 dargestellten Ausführungsbeispiel aus dem Meßelement 7.1 und dem niederohmigen Widerstand 8.1 besteht. Der Meßvorrichtung 22 ist eine Polarisationseinrichtung 23 parallelgeschaltet, die einen Potentiostaten 24 aufweist. Durch einen Wechselschalter 25 mit zwei Kontaktzungen 25.1 und 25.2 können die von dem Fühlelement 16 kommenden elektrischen Leiter 6 entweder von Hand oder mit Hilfe eines geeigneten Antriebes 26 wahlweise von der Meßvorrichtung 22 auf die Polarisationseinrichtung 23 und umgekehrt umgeschaltet werden. Hierdurch ist es möglich, nach Beginn der Korrosion der Anoden-Elektrode des Fühlelementes 16 den Korrosionsstrom mit der Meßvorrichtung 22 zu messen, nach Abschluß der Messung jedoch die elektrischen Leiter 6 an die Polarisationseinrichtung 23 anzulegen. Der Potentiostat 24 der Polarisationseinrichtung 23 polarisiert dann die Anoden-Elektrode aus Betonstahl so, daß der Korrosionsstrom und damit die Korrosion an demjenigen Fühlelement zum Stillstand kommt, an welches die Meßschaltung 21 angeschlossen ist. Soll später der jeweils aktuelle Zustand und die bestehende Korrosionsgefährdung wieder überprüft werden, kann wieder die Meßvorrichtung 22 durch Umlegen des Wechselschalters 25 mit den elektrischen Leitern 6 des Fühlelementes verbunden werden, um den Korrosionsstrom und hierdurch die dann herrschende Korrosionsintensität festzustellen.

Die Erfindung ist nicht auf die dargestellten Ausführungsbeispiele beschränkt, sondern es sind mehrere Änderungen und Ergänzungen möglich, ohne den Rahmen der Erfindung zu verlassen. Beispielsweise kann die in Fig. 8 dargestellte Meßschaltung auch bei Korrosionsmeßzellen verwendet werden, wie sie in den Fig. 2 und 3 dargestellt sind. Ferner kann auch eine andere Polarisationsschaltung für die Fühlelemente verwendet werden.

Die Korrosionsmeßzelle nach der Erfindung kann auch so ausgebildet werden, daß nicht nur die Anoden-Elektrode, sondern auch die Kathoden-Elektrode aus Betonstahl hergestellt, jedoch in bezug auf die Betonaußenfläche 2 tiefer im Betonbauteil 1 angeordnet ist als die Anoden-Elektroden. Eine solche Ausführungsform ist schematisch in Fig. 9 dargestellt. Wenn bei einer solchen Ausführungsform die Anoden-Elektrode 11 von einer Karbonatisierung oder von Chloriden erreicht wird, die von der Betonaußenfläche 2 ins Innere des Betonbauteils 1 eindringen, wird die die Anoden-Elektrode umgebende Oxidschicht zerstört. Die tiefer liegende Kathoden-Elektrode 10 jedoch, zu der die Chloride 10 noch nicht vorgedrungen sind, hat noch Korrosionsschutz. Die tiefer liegende Elektrode 10 wirkt dann automatisch als Kathode, während die höher liegende Elektrode 11 als Anode wirkt. Diese Ausführungsform der Korrosionsmeßzelle hat allerdings den Nachteil, daß sie dann nicht mehr arbeiten kann, wenn auch der Korrosionsschutz für die tiefer liegende Elektrode 10 verlorengeht.

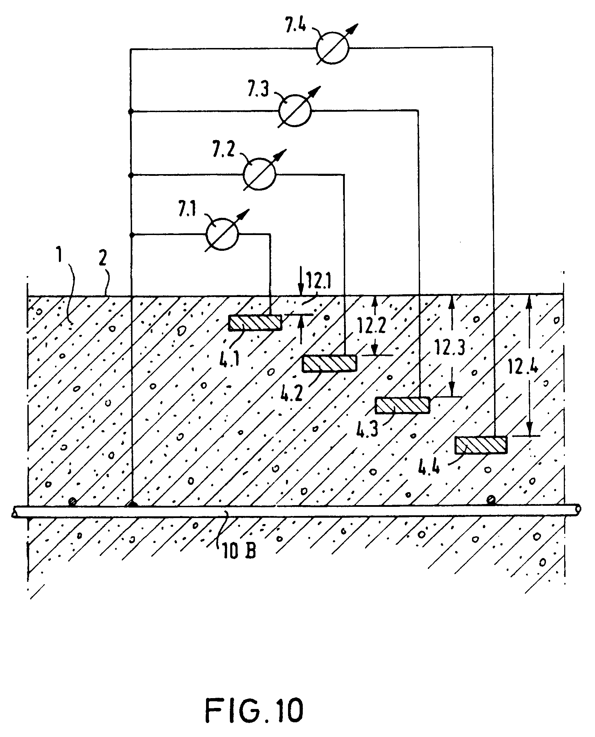

Die als Kathode arbeitende tieferliegende Elektrode 10 kann auch die im Beton eingebettete und zu überwachende Baustahl-Bewehrung sein. Das heißt, die Anoden-Elektrode 11 oder mehrere in unterschiedlicher Tiefe angeordnete Anoden-Elektroden 4.1 bis 4.4 werden über je ein Meßinstrument 7.1 bis 7.4 mit der Baustahl-Bewehrung 10B kurzgeschlossen, so daß keine gesonderten KathodenElektroden eingebaut werden müssen. Eine solche Ausführungsform ist in Fig. 10 dargestellt.

## Patentansprüche

1. Korrosionsmeßvorrichtung zum Festellen beginnender Korrosion und/oder zum Messen der Korrosionsintensität von in einem Betonbauteil eingebettetem Bau- bzw. Betonstahl, mit mehreren, in diesem Betonbauteil (1) im Abstand voneinander angeordneten Anoden-Elektroden (4) aus normalem Bau- bzw. Betonstahl, die in verschieden tiefen Abständen (12.1, 12.2,...) zur Außenfläche (2) des Betonbauteiles (1) angeordnet sind und über ein von außen zugängliches Meßelement (7) mit mindestens einer Kathoden-Elektrode (3) aus einem edleren Material elektrisch verbunden sind, die auch mit zwischengeschaltetem Isolierstück (5) mit einer Anoden-Elektrode (4) zu einem Fühlelement (16) zusammengesetzt sein kann, **dadurch gekennzeichnet,** daß alle Elektroden (3, 4) oder aus diesen zusammengesetzte Fühlelemente (16) an ihren Enden (16a, 16b) mit langgestreckten Holmen (17,18) aus den elektrischen Strom nichtleitendem Material zu einem einzigen Fühlorgan (15) verbunden sind und daß an den Holmen (17, 18) die zur Betonoberfläche (2) führenden elektrischen Leiter (6.1, 6.2,...) angeordnet sind.

2. Korrosionsmeßvorrichtung nach Anspruch 1, **dadurch gekennzeichnet**, daß jeder Holm (17, 18) mindestens einen in Längsrichtung des Holmes verlaufenden Hohlraum (20) zur Aufnahme der elektrischen Leiter aufweist.

3. Korrosionsmeßvorrichtung nach Anspruch 1 oder 2, **dadurch gekennzeichnet**, daß jede Anoden-Elektrode (4.1, 4.2 ...) in einer anderen Tiefe zur Außenfläche (2) des Betonbauteiles (1) angeordnet und mit einem eigenen Meßelement (7.1, 7.2, 7.3,...) versehen ist.

4. Korrosionsmeßvorrichtung nach einem der Ansprüche 1 bis 3, **dadurch gekennzeichnet**, daß das Fühlorgan (15) gegenüber der Betonoberfläche (2) schwach geneigt im Beton (1) derart eingebaut ist, daß die Elektroden (3, 4) in ihrer Längsrichtung etwa parallel zur Betonoberfläche (2) verlaufen, aber von dieser unterschiedlich tiefe Abstände haben.

5. Korrosionsmeßvorrichtung nach einem der Ansprüche 1 bis 4, **dadurch gekennzeichnet**, daß mindestens derjenigen Anoden-Elektrode (4) des Fühlorganes (15), die einer Betonoberfläche (2) am nächsten liegt, eine Polarisationseinrichtung (23) zugeordnet ist, auf welche der bei Korrosion der Anoden-Elektrode (4) entstehende Korrosionsstrom umschaltbar ist und welche die Anoden-Elektrode (4) so polarisiert, daß der Korrosionsstrom und damit die Korrosion der Anoden-Elektrode (4) zum Stillstand kommt.

6. Korrosionsmeßvorrichtung nach Anspruch 5, **dadurch gekennzeichnet**, daß die Polarisationseinrichtung (23) der jeweiligen Meßvorrichtung (22) parallel geschaltet ist und der Korrosionsstrom durch einen Wechselschalter (25) wahlweise auf die Meßvorrichtung (22) und die Polarisationseinrichtung (23) schaltbar ist.

7. Korrosionsmeßvorrichtung nach Anspruch 5 oder 6, **dadurch gekennzeichnet**, daß die Polarisationseinrichtung (23) einen Potentiostaten (24) aufweist.

8. Korrosionsmeßvorrichtung nach einem der Ansprüche 1 bis 7, **daduch gekennzeichnet**, daß nicht nur die Anoden-Elektroden (11), sondern auch die Kathoden-Elektroden (10) aus dem gleichen Material bestehen wie die im Betonbauteil (1) eingebetteten Bau- bzw. Betonstahlteile und daß die Kathoden-Elektrode (10) in einer größeren Tiefe (12.2) zur Außenfläche (2) des Betonbauteiles (1) angeordnet ist als die Anoden-Elektroden (11).

9. Korrosionsmeßvorrichtung nach Anspruch 8, **dadurch gekennzeichnet**, daß die Kathoden-Elektrode (10) ein im Beton des Bauelementes (1) eingebettetes Baustahlteil oder ein Betonstahl-Bewehrungselement ist.

## Claims

1. Corrosion measuring apparatus for detecting corrosion beginning and/or for measuring the intensity of corrosion of structural or reinforcing steel embedded in a concrete structural part, with a plurality of anode electrodes (4) made of normal structural or reinforcing steel which are arranged spaced from one another in this concrete structural part (1), are situated at different-depth distances (12.1, 12.2, ...) from the outer surface (2) of the concrete structural part (1), and are electrically connected via a measuring element (7) accessible from the outside with at least one cathode electrode (3) made of a higher-quality material, which can also be assembled with an anode electrode (4) with interposition of an insulating piece (5) to constitute a sensor element (16), characterised in that all the electrodes (3, 4) or sensor elements (16) assembled therefrom are connected at their ends (16a, 16b) to elongated bars (17, 18),made of a material which does not conduct the electrical current, to form a single sensing device (15), and that the electrical conductors (6.1, 6.2, ...) leading to the outer surface (2) of the concrete are arranged on the bars (17, 18).

2. Corrosion measuring apparatus according to claim 1, characterised in that each bar (17, 18) comprises at least one hollow space (20) disposed in the longitudinal direction of the bar, for accommodating the electrical conductors.

3. Corrosion measuring apparatus according to claim 1 or 2, characterised in that each anode electrode(4.1, 4.2, ...) is situated at a different depth from the outer surface (2) of the concrete structural part (1), and is provided with its own measuring element (7.1, 7.2, ...).

4. Corrosion measuring apparatus according to one of claims 1 to 3, characterised in that the sensing device (15) is so incorporated in the concrete (1), at a shallow inclination relatively to the surface (2) of the concrete, that the electrodes (3, 4) extend in their longitudinal direction approximately parallel to the concrete surface (2) but are spaced at varying depths from said surface.

5. Corrosion measuring apparatus according to one of claims 1 to 4, characterised in that there is associated with at least that anode electrode (4) of the sensing device (15) which is situated nearest to the concrete surface (2) a polarisation device (23) to which there can be connected the corrosion current produced when corrosion of the anode electrode (4) occurs and which so polarises the anode electrode (4) that the corrosion current and thus the corrosion of the anode electrode (4) come to a standstill.

6. Corrosion measuring apparatus according to claim 5, characterised in that the polarisation device (23) is connected in parallel with the respective measuring device(22) and the corrosion current can be switched by a change-over switch (25) selectively to the measuring device (22) and the polarisation device (23).

7. Corrosion measuring apparatus according to claim 5 or 6, characterised in that the polarisation device (23) comprises a potentiostat (24).

8. Corrosion measuring device according to one of claims 1 to 7, characterised in that not only the anode electrodes (11) but also the cathode electrodes (10) are made of the same material as the structural or reinforcing steel parts embedded in the concrete structural part (1), and that the cathode electrode (10) is arranged at a greater depth (12.2) from the outer surface (2) of the concrete structural part (1) than the anode electrodes (11).

9. Corrosion measuring apparatus according to claim 8, characterised in that the cathode electrode (10) is a reinforcing element made of reinforcing steel, or a structural steel part, embedded in the concrete of the structural part (1).

## Revendications

1. Dispositif de mesure de corrosion, pour déterminer le début d'une corrosion et/ou pour mesurer l'intensité de la corrosion d'un acier de construction ou à béton noyé dans un élément de construction en béton, avec plusieurs électrodes servant d'anodes (4) disposées de façon espacée les unes des autres dans cet élément de construction en béton (1) et composées d'acier de construction ou à béton normal, disposées à des espacements (12.1, 12.2, ...) de profondeurs différentes par rapport à la surface extérieure (2) de l'élément de construction en béton (1), et reliées électriquement, par l'intermédiaire d'un élément de mesure (7) accessible de l'extérieur, à au moins une électrode servant de cathode (3) composée d'un matériau plus noble, pouvant également être associée, avec une pièce d'isolation (5) interposée, à une électrode servant d'anode (4), pour former un élément capteur (16), caractérisé en ce que toutes les électrodes (3, 4), ou les éléments capteurs (16) composés de celles-ci, sont reliés, à leurs extrémités (16a, 16b), à des montants allongés (17, 18) composés d'un matériau non-conducteur du courant électrique pour former un organe capteur (15) unique, et en ce que les conducteurs (6.1, 6.2...), conducteurs de l'électricité, menant à la surface de béton (2) sont disposés sur les montants (17, 18).

2. Dispositif de mesure de corrosion selon la revendication 1, caractérisé en ce que chaque montant (17, 18) présente au moins un espace en creux (20) s'étendant dans la direction longitudinale du montant, pour recevoir les conducteurs électriques.

3. Dispositif de mesure de corrosion selon la revendication 1 ou 2, caractérisé en ce que chaque électrode servant d'anode (4.1, 4.2, ..) est disposée à une autre profondeur, par rapport à la surface extérieure (2) de l'élément de construction en béton (1) et pourvue d'un élément de mesure (7.1, 7.2, 7.3, ...) propre.

4. Dispositif de mesure de corrosion selon l'une des revendications 1 à 3, caractérisé en ce que l'élément capteur (15) est faiblement incliné par rapport à la surface de béton (2), dans le béton (1), de telle façon que les électrodes (3, 4) s'étendent dans leur direction longitudinale à peu près parallèlement à la surface de béton (2), mais en présentant des profondeurs différentes par rapport à cette surface.

5. Dispositif de mesure de corrosion selon l'une des revendications 1 à 4, caractérisé en ce qu'à au moins l'électrode servant d'anode (4) de l'organe capteur (15), située le plus près d'une surface de béton (2), est associée un dispositif de polarisation (23), sur lequel le courant de corrosion apparaissant lors de la corrosion de l'électrode servant d'anode (4) peut être commuté et qui polarise l'électrode servant d'anode (4) de façon que le courant de corrosion et ainsi la corrosion de l'électrode d'anode (4) cesse.

6. Dispositif de mesure de corrosion selon la revendication 5, caractérisé en ce que les dispositifs de polarisation (23) des dispositifs de mesure (22) respectivement sont mis en circuit en parallèle, et le courant de corrosion est susceptible d'être commuté au choix au moyen d'un commutateur alterné (25), sur le dispositif de mesure (22) et le dispositif de polarisation (23).

7. Dispositif de mesure de corrosion selon la revendication 5 ou 6, caractérisé en ce que le dispositif de polarisation (23) présente un potentiostat (24).

8. Dispositif de mesure de corrosion selon l'une des revendications 1 à 7, caractérisé en ce que non seulement les électrodes servant d'anodes (11) mais également les électrodes servant de cathodes (10) sont composées du même matériau que les parties en acier de construction ou à béton noyées dans l'élément de construction en béton (1), et en ce que l'électrode servant de cathode (10) est disposée à une profondeur (12.2) supérieure, par rapport à la surface extérieure (2), à la profondeur à laquelle sont disposées les électrodes servant d'anodes (11).

9. Dispositif de mesure de corrosion selon la revendication 8, caractérisé en ce que l'électrode servant de cathode (10) est un élément en acier de construction ou un élément d'armature en acier à béton, noyé dans le béton de l'élément de construction (1).
